# EUROPÄISCHE PATENTSCHRIFT

(11) **EP 2 165 315 B1**
(45) Veröffentlichungstag und Bekanntmachung des Hinweises auf die Patenterteilung: **10.09.2014**
(21) Anmeldenummer: 08784647.3
(22) Anmeldetag: 03.07.2008
(51) Int. Cl.: G07D 7/12

(54) **DOKUMENTERFASSUNGSSYSTEM UND DOKUMENTERFASSUNGSVERFAHREN**
DOCUMENT RECORDING SYSTEM, AND DOCUMENT RECORDING METHOD
SYSTÈME ET PROCÉDÉ DE VÉRIFICATION DE DOCUMENTS

(30) Priorität: 04.07.2007 DE 102007031230
(43) Veröffentlichungstag der Anmeldung: 24.03.2010
(73) Patentinhaber: Bundesdruckerei GmbH, 10969 Berlin (DE)
(72) Erfinder: DRESSEL, Olaf, 14641 Wustermark (DE)
(74) Vertreter: Patentanwälte Bressel und Partner mbB
(86) Internationale Anmeldenummer: PCT/EP2008/005554
(87) Internationale Veröffentlichungsnummer: WO 2009/003725

(56) Entgegenhaltungen:
- EP-A- 0 675 466
- EP-A- 1 037 173
- EP-A- 1 248 224
- EP-A- 1 589 496
- DE-A1- 10 137 043
- JP-A- 6 260 627
- JP-A- 2000 138 796
- JP-A- 2007 079 325
- US-A1- 2002 135 825
- US-A1- 2005 200 960

## Beschreibung

Die Erfindung betrifft ein Dokumenterfassungssystem und ein Dokumenterfassungsverfahren zum optischen Erfassen eines Dokuments, insbesondere Personaldokuments, umfassend mindestens ein Leuchtmittel zum Beleuchten des Dokuments, mindestens einen optischen Sensor und eine Abbildungsoptik zum Abbilden des Dokuments auf dem mindestens einen optischen Sensor. Insbesondere betrifft die Erfindung ein Dokumentenerfassungssystem und ein Dokumenterfassungsverfahren zur Verifikation von Dokumenten, beispielsweise zur Prüfung einer Echtheit.

Aus dem Stand der Technik ist es bekannt, Dokumente, beispielsweise Reisepässe, mittels einer oder mehrerer Kameras zu erfassen. Für eine Abbildung des Dokuments auf die eine oder die mehreren Kameras wird eine Abbildungsoptik benötigt. Ein solches Dokumenterfassungssystem ist beispielsweise aus der WO 84/02046 bekannt, bei dem mehrere Videokameras in einem Gehäuse unter einer transparenten Digitalisierungsoberfläche, die im Folgenden auch als Dokumentauflage bezeichnet ist, angeordnet sind. Das Dokument kann anhand der von den einzelnen Videokameras aufgenommenen Bilder digital erfasst werden, wobei die von den Kameras erfassten Bereiche des Dokuments einander überlappen, so dass eine Korrektur hinsichtlich des Versatzes notwendig ist.

Aus der US 6,771,396 B1 ist ein Verfahren zum Kalibrieren eines Abbildungserfassungssystems und nachfolgenden Erfassen einer Abbildung eines Dokuments bekannt. Die Kamera nimmt nacheinander bei der Erfassung einzelne Abschnitte des Dokuments auf, die jeweils benachbarte Abschnitte überlappen. Um die einzelnen aufgenommenen Abschnitte des Dokuments zu einer Abbildung des Dokuments zusammenfügen zu können, müssen die Verzerrungen der einzelnen Abschnitte rechnerisch korrigiert werden. Hierfür werden Merkmale aus entsprechend aufgenommenen Abschnitten einer regelmäßigen Kalibrationsanordnung verwendet, die mehrere voneinander beabstandete und mit vorbekannter Orientierung versehene Merkmale umfasst und im Erfassungsbereich vor einer Dokumenterfassung angeordnet ist.

Aus US 6,002,743 ist ein Abbildungsaufnahmesystem bekannt, bei dem mehrere Kameras oder Abbildungssensoren in einem Reihen und Spalten umfassenden Array so angeordnet sind, dass sich die Sichtbereiche der aneinander angrenzend angeordneten Kameras jeweils überlappen.

Bei all den beschriebenen Systemen sind ein oder mehrere optische Elemente einer Abbildungsoptik notwendig, um das Dokument auf den oder die Kameras bzw. den oder die optischen Sensoren abzubilden. In dem Bestreben, Dokumenterfassungssysteme zu schaffen, die senkrecht zur Dokumentebene nur eine geringe Ausdehnung aufweisen, d.h. flach sind, sind Dokumenterfassungssysteme konzipiert worden, bei denen eine ein Mikrolinsenarray umfassende Abbildungsoptik zusammen mit einem elektronischen optischen Sensor genutzt wird.

Solche Systeme sind beispielsweise in dem Artikel "Artificial apposition compound eye fabricated by micro-optics technology" von Jacques Duparré et al., Applied Optics, Vol. 43, No. 22, Seiten 4303 bis 4310, 01. August 2004, und dem Artikel "Thin compound-eye camera" von Jacques Duparré et al., Applied Optics, Vol. 44, No. 15, Seiten 2949 bis 2956, 20. Mai 2005 beschrieben. Die darin beschriebenen Mikrolinsenarrays sind auf einer Abstandsschicht angeordnet oder direkt auf dieser ausgebildet. Die Abstandsschicht wiederum ist auf dem CMOS-Sensor angeordnet. Zwischen den Mikrolinsen und der Abstandsschicht können Aperturen vorgesehen sein. An dem den Mikrolinsen abgewandten Ende der Abstandsschicht können Lochblenden vorgesehen sein. Hierbei ist vorzugsweise jeder Mikrolinse eine Lochblende zugeordnet. Über eine Ausrichtung der Lochblenden gegenüber den Mikrolinsen werden die Sichtbereiche einzelner optischer Kanäle bzw. der von den einzelnen Mikrolinsen abgebildeten Blickfelder und hierüber der gesamte Sichtbereich des Mikrolinsenarrays festgelegt. Jeder Mikrolinse ist hierbei ein optischer Kanal zugeordnet. Um ein Übersprechen zwischen den benachbarten Kanälen zu vermeiden, können in der Abstandsschicht einzelne optische Kanäle ausgebildet sein, die durch lichtundurchlässige Wände voneinander getrennt sind. Hierdurch kann ein Auftreten von Geisterbildern aufgrund des Übersprechens vermieden werden. Die Erfassungssysteme, die mittels eines elektronischen optischen Sensors und einer ein Mikrolinsenarray umfassenden Abbildungsoptik gebildet sind, weisen nur eine sehr geringe Bautiefe auf. Die Abstandsschicht und das Mikrolinsenarray können Abmessungen von weniger als 1 mm, vorzugsweise von etwa 350 µm, aufweisen. Um ein Personendokument, wie beispielsweise einen Reisepass, mittels eines solchen Erfassungssystems vollständig zu erfassen, wäre ein sehr ausgedehntes Mikrolinsenarray und ein entsprechend großer elektronischer optischer Sensor notwendig. Diese sind derzeit technisch nicht realisierbar. Darüber hinaus besteht die Schwierigkeit, eine homogene Ausleuchtung des Dokuments zu erreichen. Um großflächige Dokumente erfassen zu können, ist daher der Einsatz mehrerer in einem Raster angeordneter Erfassungssysteme denkbar. Insbesondere zwischen den Erfassungssensoren ist eine Ausleuchtung des Dokuments jedoch schwierig.

US 6,714,323 B1 beschreibt eine Dokumenterfassungsvorrichtung mit einer Ausleuchtungsoptik und einer Abbildungsoptik, mit der ein Dokument streifenweise erfassbar ist.

EP 1037173 A1 zeigt eine Vorrichtung zum Scannen von Banknoten.

Der Erfindung liegt die technische Aufgabe zugrunde, ein Dokumentenerfassungssystem und ein Verfahren zum Erfassen eines Dokuments zu schaffen, welches eine geringe Ausdehnung senkrecht zu einer Dokumentenebene aufweist und eine möglichst schnelle und vollständige Erfassung ermöglicht.

Die technische Aufgabe wird erfindungsgemäß durch ein Dokumenterfassungssystem mit den Merkmalen des Patentanspruchs 1 sowie ein Verfahren zur Erfassung eines Dokuments mit den Merkmalen des Patentanspruchs 7 gelöst. Vorteilhafte Ausgestaltungen der Erfindung ergeben sich aus den Unteransprüchen.

Um eine schnelle und zuverlässige Erfassung eines Dokuments zu ermöglichen, ist es notwendig, das Dokument homogen auszuleuchten. Hierdurch können dann notwendige Korrekturberechnungen hinsichtlich der Helligkeit der einzelnen Bildpunkte eingespart werden. Bei einer eingangs genannten Vorrichtung ist daher vorgesehen, dass das mindestens eine Leuchtmittel mit einer Ausleuchtungsoptik gekoppelt ist, die eine möglichst homogene Ausleuchtung des Dokuments ermöglicht. Über eine Ausleuchtungsoptik ist es möglich, die von dem mindestens einen Leuchtmittel emittierte Strahlung so auf das Dokument zu lenken, dass dieses homogen ausgeleuchtet ist. Unter einer homogenen Ausleuchtung ist hierbei eine solche Ausleuchtung zu verstehen, die auf dem entsprechenden optischen Sensor Bildpunkte gleicher Intensität erzeugt, sofern das Dokument homogen ist.

Um eine solche Ausleuchtung des Dokuments zu erreichen, ist vorgesehen, dass die Ausleuchtungsoptik mindestens ein Ausleucht-Mikrolinsenarray umfasst. Mit einem Ausleucht-Mikrolinsenarray ist es möglich, die von der mindestens einen Leuchtquelle emittierte Strahlung einzelnen Bereichen des Dokuments gezielt zuzuleiten. Ferner weist eine solche Ausleuchtungsoptik eine sehr geringe Bauhöhe auf und kann so in ein flaches Dokumenterfassungssystem einfach integriert werden.

Bei großflächigen Dokumenten hat es sich als vorteilhaft erwiesen, weitere optische Sensoren gemeinsam mit dem mindestens einen optischen Sensor in einem Raster anzuordnen und das eine Leuchtmittel und weitere Leuchtmittel benachbart und/oder zwischen dem mindestens einen optischen Sensor und den weiteren optischen Sensoren anzuordnen. Dies bedeutet, dass das mindestens eine Leuchtmittel und in der Regel weitere Leuchtmittel insbesondere zwischen den optischen Sensoren angeordnet sind. Somit wird das Dokument mittels des mindestens einen Leuchtmittels und weiteren Leuchtmitteln ausgeleuchtet, wobei mindestens eines dieser Leuchtmittel zwischen dem mindestens einen optischen Sensor und einem der weiteren optischen Sensoren angeordnet ist und die übrigen Leuchtmittel des mindestens einen Leuchtmittels und weiteren Leuchtmittel benachbart zu dem mindestens einen optischen Sensor oder benachbart zu einem der weiteren optischen Sensoren oder zwischen dem mindestens einen optischen Sensor und einem der weiteren optischen Sensoren oder zwischen zwei der weiteren optischen Sensoren angeordnet sind.

Hierbei ist vorgesehen, die Ausleuchtungsoptik so auszugestalten, dass für das mindestens eine Leuchtmittel und die weiteren Leuchtmittel jeweils ein Ausleucht-Mikrolinsenarray vorgesehen ist. Hierdurch wird es möglich, die von dem mindestens einen Leuchtmittel und den weiteren Leuchtmitteln emittierte Strahlung jeweils optimal hinsichtlich einer homogenen Ausleuchtung des Dokuments auf dieses zu leiten. Jedes Leuchtmittel kann über ein zugeordnetes Ausleucht-Mikrolinsenarray einen entsprechenden Bereich optimal ausleuchten.

Um ein einfach ausgebildetes Dokumentenerfassungssystem zu erhalten, ist dem mindestens einen optischen Sensor das eine Abbildungs-Mikrolinsenarray und den weiteren optischen Sensoren jeweils ein weiteres Abbildungs-Mikrolinsenarray zugeordnet.

Herstellungstechnisch ist es vorteilhaft, die Mikrolinsen des oder der Ausleucht-Mikrolinsenarrays in einer Ebene anzuordnen. Dieses bietet vor allem die Möglichkeit, die einzelnen Ausleucht-Mikrolinsenarrays untereinander und insbesondere bezüglich der Abbildungs-Mikrolinsenarrays auszurichten. Insbesondere wenn eine nicht überlappende, jedoch vollständige Abbildung des Dokuments mittels mehrerer optischer Sensoren angestrebt wird, ist es vorteilhaft, ein Abbildungs-Mikrolinsenarray und die weiteren Abbildungs-Mikrolinsenarrays und das mindestens eine Ausleucht-Mikrolinsenarray und die weiteren Ausleucht-Mikrolinsenarrays miteinander mechanisch zu verbinden. Hierdurch wird eine mögliche Dejustage der optischen Elemente zueinander verhindert. Außerdem wird eine Ausrichtung der einzelnen Leuchtmittel zueinander und der Leuchtmittel zu den optischen Sensoren und der optischen Sensoren zueinander vereinfacht. Diese müssen jeweils nur bezüglich ihres entsprechenden Abbildungs-Mikrolinsenarrays bzw. Ausleucht-Mikrolinsenarrays justiert werden und sind dann automatisch bezüglich der anderen Leuchtmittel bzw. optischen Sensoren korrekt ausgerichtet.

Eine zuverlässige relative Ausrichtung zueinander und eine optimale mechanische Verbindung der Abbildungs-Mikrolinsenarrays und/oder weiteren Abbildungs-Mikrolinsenarrays und des mindestens einen Ausleucht-Mikrolinsenarrays und/oder der weiteren Ausleucht-Mikrolinsenarrays erreicht man, indem diese gemeinsam auf einem Trägermaterial ausgebildet werden. Das Trägermaterial dient vorzugsweise als Abstandsschicht, zumindest zwischen den Mikrolinsen des Abbildungs-Mikrolinsenarrays und den optischen Sensoren.

Bei einer bevorzugten Ausführungsform sind die Mikrolinsen des mindestens einen Ausleucht-Mikrolinsenarrays Zerstreuungslinsen. Die von einem punktförmigen oder kleinflächigen bzw. kleinvolumigen Leuchtmittel emittierte Strahlung kann so aufgefächert werden, um das gesamte Dokument bzw. bei einer Verwendung von mehreren Leuchtmitteln Bereiche des Dokuments homogen auszuleuchten.

Die von dem optischen Sensor oder den mehreren optischen Sensoren erfassten Signale werden einer Auswerteeinheit zugeführt, die die Bilddaten hinsichtlich einer Dokumentverifikation auswertet. Hierbei ist es möglich, dass die Daten der mehreren optischen Sensoren zeitgleich erfasst und gemeinsam von der Auswerteeinrichtung ausgewertet werden. Ebenso ist es möglich, das Dokument zeitversetzt mittels der mehreren optischen Sensoren aufzunehmen und hierbei erhaltene Daten anschließend auszuwerten.

Um bei einer Verifikation auch Sicherheitsmerkmale auswerten zu können, die eine Beleuchtung mit elektromagnetischer Strahlung unterschiedlicher Wellenlängenspektren erfordert, ist bei einer bevorzugten Ausführungsform vorgesehen, dass ein oder mehrere zusätzliche Leuchtmittel mit der Ausleuchtungsoptik gekoppelt sind, so dass das Dokument mit der von dem einen oder den mehreren zusätzlichen Leuchtmitteln emittierten Strahlung zusätzlich oder alternativ ausleuchtbar ist, wobei das eine oder die mehreren zusätzlichen Leuchtmittel die elektromagnetische Strahlung mit einem Spektrum emittieren, das sich von dem Spektrum der elektromagnetischen Strahlung des mindestens einen Leuchtmittels und/oder der weiteren Leuchtmittel unterscheidet.

Das mindestens eine Leuchtmittel, die weiteren Leuchtmittel und/oder die zusätzlichen Leuchtmittel sind vorzugsweise als LEDs oder Leserdioden ausgebildet. Diese Lichtquellen bieten eine hohe Quantenausbeute und weisen somit eine relativ geringe Verlustleistung auf, so dass die bei der Erzeugung der elektromagnetischen Strahlung auftretende Wärme gering gehalten wird und aus dem Dokumenterfassungssystem gut ableitbar ist.

Das mindestens eine Leuchtmittel, die weiteren Leuchtmittel und/oder das zusätzliche Leuchtmittel oder die zusätzlichen Leuchtmittel emittieren elektromagnetische Strahlung im infraroten Wellenlängenbereich, im sichtbaren Wellenlängenbereich und/oder im ultravioletten Wellenlängenbereich. Die Wellenlänge wird jeweils angepasst an die Sicherheitsmerkmale der zu prüfenden Dokumente gewählt.

Alternativ und/oder zusätzlich zu einer Ausleuchtung des Dokumentes mit elektromagnetischer Strahlung unterschiedlicher Wellenlängen kann es auch von Vorteil sein, die Ausleuchtungsoptik so auszugestalten, dass das Dokument mit elektromagnetischer Strahlung des mindestens einen Leuchtmittels und der weiteren Leuchtmittel unter einem ersten Beleuchtungswinkel einerseits und der elektromagnetischen Strahlung der zusätzlichen Leuchtmittel unter einem von dem ersten Beleuchtungswinkel verschiedenen zweiten Beleuchtungswinkel andererseits gleichzeitig oder zeitversetzt ausleuchtbar ist. Hierdurch können spezielle Sicherheitsmerkmale auf Dokumenten selektiv abgebildet werden. Bei dieser Ausführungsform können das mindestens eine Leuchtmittel, die weiteren Leuchtmittel und das zusätzliche Leuchtmittel Strahlung im selben spektralen Wellenlängenbereich oder in unterschiedlichen spektralen Wellenlängenbereichen emittieren.

Eine besonders homogene Ausleuchtung des Dokuments wird mit einer Ausführungsform erreicht, bei der mit jedem mittels einer Mikrolinse der Abbildungsoptik abgebildeten Dokumentbereich mindestens eine Mikrolinse der Ausleuchtungsoptik korrespondiert. Hierdurch ist es möglich, eine pixelgenaue, d.h. bildpunkt- oder bildkanalgenaue Ausleuchtung und Abbildung zu realisieren.

Um eine Lichtintensität, die durch eine der Mikrolinsen des Ausleucht-Mikrolinsenarrays abgebildet wird, zu steuern, können Aperturen oder Blenden vor den einzelnen Mikrolinsen vorgesehen sein, die unterschiedliche Apertur- oder Blendendurchmesser aufweisen. Dies ist u.a. dann von Vorteil, wenn sich die Dokumentbereiche, die von den einzelnen Mikrolinsen des Ausleucht-Mikrolinsenarrays ausgeleuchtet werden, flächig unterschiedlich groß sind.

Die Merkmale des erfindungsgemäßen Verfahrens weisen dieselben Vorteile wie die entsprechenden Merkmale des Dokumentenerfassungssystems auf.

Nachfolgend wird die Erfindung anhand bevorzugter Ausführungsbeispiele unter Bezugnahme auf eine Zeichnung näher erläutert. Hierbei zeigen:
- Fig. 1: eine schematische Darstellung eines Dokumentenerfassungssystems zur Verifikation von Dokumenten;
- Fig. 2: eine schematische Draufsicht auf die Dokumentenauflagefläche des Dokumentenerfassungssystems nach Fig. 1 zur Erläuterung der Erfassungsbereiche der einzelnen optischen Sensoren und eine Anordnung der Ausleuchtungsoptik und der Abbildungsoptik;
- Fig. 3: eine Darstellung der Abbildungsbereiche und Anordnung von Leuchtmitteln einer alternativen Ausführungsform eines Dokumentenerfassungssystems;
- Fig. 4: eine schematische Darstellung einer Ausführungsform eines Ausleucht-Mikrolinsenarrays für ein Leuchtmittel;
- Fig. 5: eine schematische Darstellung eines weiteren Dokumentenerfassungssystems zur Verifikation von Dokumenten; und
- Fig. 6: eine schematische Darstellung eines optischen Systems einer weiteren sehr stark vereinfachten Ausführungsform eines Dokumentenerfassungssystems.

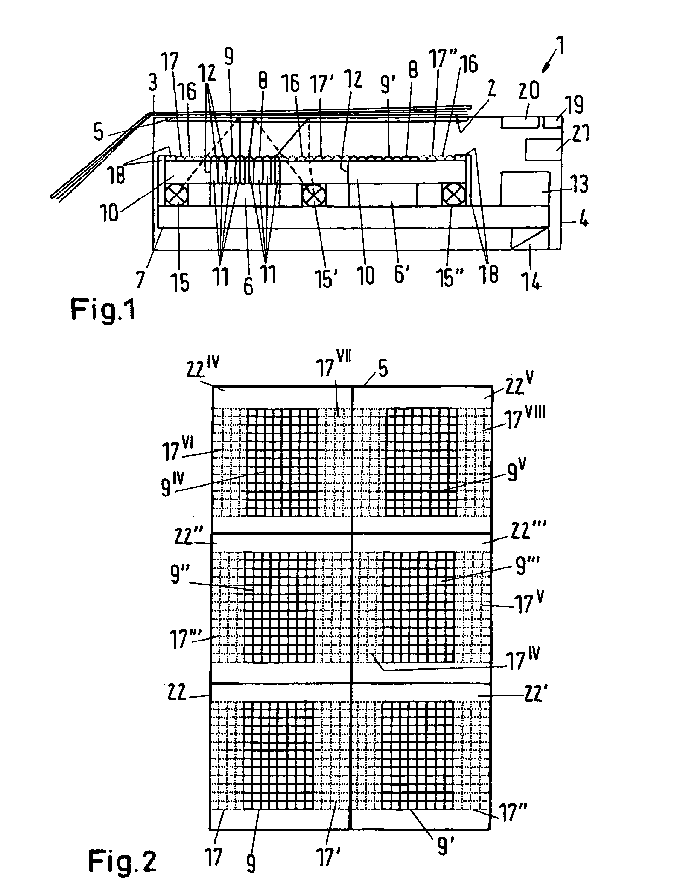

In Fig. 1 ist ein Dokumentenerfassungssystem 1 dargestellt. Dieses wird verwendet, um ein Dokument 2, beispielsweise eine Seite eines Reisepasses 3, zu verifizieren. Das Dokumentenerfassungssystem 1 umfasst ein Gehäuse 4, in das eine Dokumentenauflagefläche 5 eingearbeitet ist. Die Dokumentenauflagefläche 5 ist vorzugsweise aus einem transparenten Material, beispielsweise Glas oder Plexiglas oder einem anderen transparenten Kunststoff, ausgebildet. Das zu verifizierende Dokument 2 wird auf der Dokumentenauflagefläche 5 anliegend an diese angeordnet.

Zur Erfassung des Dokuments 2 sind optische Sensoren 6, 6' auf einer Trägerstruktur 7, die vorzugsweise als Leiterplatine ausgebildet ist, angeordnet. Die optischen Sensoren 6 sind auf der Trägerstruktur 7 vorzugsweise in einem matrixartigen Raster angeordnet. Bei den optischen Sensoren 6, 6' handelt es sich vorzugsweise um CMOS-Sensoren oder CCD-Kamerasensoren. Prinzipiell kann jeder elektronische Sensor eingesetzt werden, der pixeliert zumindest unterschiedliche Helligkeitswerte für die abgebildeten Bildbereiche des Dokuments 2 erfassen und in elektronische Signale wandeln kann.

Um das Dokument 2 auf die optischen Sensoren 6, 6' abzubilden, ist eine Abbildungsoptik 8 vorgesehen, die in der dargestellten Ausführungsform mittels durchgezogener Linien dargestellte Abbildungs-Mikrolinsenarrays 9, 9' umfasst. Hierbei ist jedem der optischen Sensoren 6, 6' jeweils eines der Abbildungs-Mikrolinsenarrays 9, 9' zugeordnet. Die einzelnen Mikrolinsen der Mikrolinsenarrays 9, 9' sind auf einem als Abstandselement dienenden Substrat 10 ausgebildet, das zwischen den Mikrolinsen des Mikrolinsenarrays 9 und den entsprechenden optischen Sensoren 6, 6' angeordnet ist. Das Substrat 10 kann strukturiert sein, so dass für jede Mikrolinse eines Mikrolinsenarrays 9 ein eigener Kanal 11 ausgebildet ist, der optisch durch nicht transparente Wandschichten 12 von benachbarten Kanälen 11 getrennt ist, um ein optisches Übersprechen zwischen den einzelnen Kanälen 11 zu vermeiden. Für den in der Fig. 1 links dargestellten optischen Sensor 6 ist das Substrat 10 exemplarisch in Kanäle 11 strukturiert, die von nicht transparenten Wandschichten 12 getrennt sind, wohingegen das Substrat 10 angrenzend an das Mikrolinsenarray 9' und den optischen Sensor 6', der rechts dargestellt ist, nicht strukturiert ist.

Die von den optischen Sensoren 6, 6' erfassten Bildinformationen werden in Form von elektrischen Signalen an eine Auswerteeinheit 13 weitergeleitet. Die Auswerteeinheit 13 ist so ausgebildet, dass sie aus den elektrischen Signalen der Sensoren 6, 6' eine Abbildung des Dokuments 2 erzeugen kann. Diese Abbildung kann über eine Schnittstelle 14 beispielsweise einem Rechner zur Verfügung gestellt werden, der die Abbildung oder Teile hiervon, beispielsweise ein Passfoto, einen Namenszug, eine Dokumentennummer, beispielsweise eine Reisepassnummer, usw., anhand dem Fachmann bekannter Methoden verifiziert. Die Auswerteeinheit 13 kann jedoch auch so ausgestaltet sein, dass die Verifikation einzelner Sicherheitsmerkmale oder aller Sicherheitsmerkmale in der Auswerteeinheit 13 ausgeführt wird. Hierzu kann die Auswerteeinheit über die Schnittstelle 14 erforderliche Daten empfangen und gegebenenfalls von einer anderen Vorrichtung einlesen und abfordern.

Als problematisch hat sich die Ausleuchtung des Dokuments 2 insbesondere zwischen den Sensoren 6, 6' erwiesen. Bei der dargestellten Ausführungsform sind daher benachbart und zwischen den optischen Sensoren 6, 6' Leuchtmittel 15, 15', 15" angeordnet. Die Leuchtmittel 15, 15', 15" sind vorzugsweise als Leuchtdioden, Laserdioden, OLEDs usw. ausgebildet. Die Wellenlängenspektren der Leuchtmittel 15, 15', 15" können vom nahen infraroten über den sichtbaren Bereich bis in den UV-Bereich reichen. Je nach Art des zu verifizierenden Dokuments 2 und der darin enthaltenen Sicherheitsmerkmale wird die spektrale Verteilung der von den Leuchtmitteln 15, 15', 15" erzeugten elektromagnetischen Strahlung gewählt. Ein Leuchtmittel 15, 15', 15" kann hierbei unterschiedliche Leuchtquellen enthalten, die elektromagnetische Strahlung unterschiedlicher Wellenlängenbereiche emittieren und ein gewünschtes Gesamtspektrum des Leuchtmittels 15, 15', 15" erzeugen. Alternativ und zusätzlich kann es vorgesehen sein, dass Leuchtmittel 15, 15', 15" unterschiedlicher Art verwendet werden, um das Dokument mit elektromagnetischer Strahlung unterschiedlicher spektraler Verteilung auszuleuchten.

Um die Ausleuchtung des Dokuments 2 homogen zu gestalten, d.h., dass ein eine homogene Oberfläche aufweisendes Dokument an jedem Bildpunkt des zugehörigen optischen Sensors 6, 6' ein nahezu identisches Signal erzeugt, ist eine Ausleuchtungsoptik 16 vorgesehen. In einer bevorzugten Ausführungsform, wie sie in Fig. 1 dargestellt ist, umfasst die Ausleuchtungsoptik 16 Ausleucht-Mikrolinsenarrays 17, 17', 17", die mittels gepunkteter Linien dargestellt sind. Jedem der Leuchtmittel 15, 15', 15" ist in der dargestellten Ausführungsform jeweils ein entsprechendes Ausleucht-Mikrolinsenarray 17, 17', 17" zugeordnet. Die Ausgestaltung der Ausleucht-Mikrolinsenarrays 17, 17', 17" ist vorzugsweise so vorgenommen, dass jeder Mikrolinse eines Abbildungs-Mikrolinsenarrays 9, 9' mindestens genau eine Mikrolinse eines Ausleucht-Mikrolinsenarrays 17, 17', 17" zugeordnet ist. Dies bedeutet, dass jedem Bereich des Dokuments 2, der mittels einer Mikrolinse eines Abbildungs-Mikrolinsenarrays 9, 9' auf einen der optischen Sensoren 6, 6' abgebildet wird, eine Mikrolinse eines Ausleucht-Mikrolinsenarrays 17, 17', 17" zugeordnet ist, die elektromagnetische Strahlung des zugehörigen Leuchtmittels 15, 15', 15" in diesen Bereich des Dokuments 2 leitet.

Hierdurch ist eine pixelgenaue homogene Ausleuchtung des Dokuments möglich. Bei anderen Ausführungsformen kann vorgesehen sein, dass mehreren Bildbereichen, die durch mehrere Mikrolinsen eines Abbildungsmikrolinsenarrays 9, 9' abgebildet werden, eine Mikrolinse eines Ausleucht-Mikrolinsenarrays 17, 17', 17" zugeordnet ist.

Es ergibt sich für den Fachmann, dass die halbkreisförmige Schnittdarstellung durch die Mikrolinsen sowohl der Ausleucht-Mikrolinsenarrays 17, 17', 17" als auch der Abbildungs-Mikrolinsenarrays 9, 9' lediglich schematisch Mikrolinsen andeuten sollen und nicht die reale Form der einzelnen Mikrolinsen widerspiegeln sollen. Diese werden bei einer bevorzugten Ausführungsform individuell angepasst an die entsprechende Abbildungsgeometrie berechnet und ausgebildet.

Zwischen den einzelnen Mikrolinsen sowohl der Abbildungs-Mikrolinsenarrays 9, 9' als auch der Ausleucht-Mikrolinsenarrays 17, 17', 17" einerseits und dem Substrat 10 andererseits kann eine Metallschicht angeordnet sein, die als Aperturen wirkende Aussparungen aufweist. Ebenso kann an einem entgegengesetzten Ende des Substrats 10 eine Metallschicht mit als Lochblenden ausgebildeten Aussparungen vorgesehen sein. Insbesondere für die Abbildungsoptik 8 lassen sich so Sichtbereiche der den einzelnen Linsen zugeordneten Kanäle durch die Anordnung der Lochblenden relativ zu den Linsenmittelpunkten festlegen.

Um eine optimale Ausrichtung der Ausleuchtungsoptik 16 und der Abbildungsoptik 8 zu erreichen, ist es vorteilhaft, wenn die Abbildungs-Mikrolinsenarrays 9, 9' und die Ausleucht-Mikrolinsenarrays 17, 17', 17" auf demselben Substrat 10 ausgebildet werden. Werden die einzelnen Mikrolinsenarrays 9, 9', 17, 17', 17" separat ausgebildet, so ist es vorteilhaft, diese gegeneinander auszurichten und miteinander zu verbinden.

Um eine Ausbreitung von Streulicht der Leuchtmittel 15, 15', 15" zu unterbinden, können Abblendelemente 18 vorgesehen sein. Die dargestellten Abblendelemente 18 sind nur exemplarisch dargestellt und können beliebig beabstandet oder anliegend an die Leuchtmitteln 15, 15', 15" so angeordnet sein, dass sie eine Streulichtausbreitung adäquat verhindern. Ferner ist es vorteilhaft, das Substrat 10, auf dem die Ausleucht-Mikrolinsenarrays 17, 17', 17" und die Abbildungs-Mikrolinsenarrays 9, 9' ausgebildet sind, zu strukturieren und nicht transparente Wandschichten 12 einzufügen, die eine Streulichtausbreitung zu den optischen Sensoren 6, 6' unterbinden. Dieses ist exemplarisch an dem Übergang von dem Ausleucht-Mikrolinsenarray 17' zu dem Abbildungs-Mikrolinsenarray 9' angedeutet. Für die Bedienung des Dokumentenerfassungssystems 1 weist dieses ein oder mehrere Bedienelemente 19 sowie vorzugsweise ein beispielsweise als LCD-Anzeige ausgebildetes Anzeigeelement 20 auf. Wurde das untersuchte Dokument 2 als echt verifiziert, so kann dieses Verifikationsergebnis beispielsweise auf dem Anzeigeelement 20 angezeigt werden. Das Verifikationsergebnis kann jedoch ebenso als elektronisches Signal über die Schnittstelle 14 ausgegeben werden. Für eine Versorgung mit elektrischer Energie weist das Dokumentenerfassungssystem eine Stromversorgungseinheit 21 auf. Diese kann Batterien oder Akkumulatoren umfassen oder auch eine Transformator-Gleichrichter-Einheit, die an einer externen Wechselspannungsquelle betrieben werden kann. Ebenso ist ein Betrieb an einer externen Gleichspannungsversorgung möglich. Vorzugsweise ist das Dokumentenerfassungssystem 1 so ausgestaltet, dass die Auswerteeinheit 13 eine Rechnereinheit umfasst, auf der ein in Programmcode ausgebildetes Steuerungs-und Regelungsprogramm ausgeführt wird. Mittels der Auswerteeinheit 13 oder einer getrennt ausgebildeten Steuereinheit wird sowohl die Ansteuerung der Leuchtmittel 15, 15', 15" als auch die Dokumentenerfassung mittels der optischen Sensoren 6, 6' gesteuert.

In Fig. 2 ist eine Draufsicht auf die Dokumentenauflagefläche 5 schematisch dargestellt. Eingezeichnet sind Erfassungsbereiche 22-22^{V}, die einzelnen optischen Sensoren zugeordnet sind, die hier beispielhaft in einem 2 x 3 Raster, welches zwei Spalten und drei Zeilen umfasst, angeordnet sind. Die einzelnen optischen Sensoren sind hierbei zueinander jeweils so ausgerichtet, dass die Erfassungsbereiche 22-22^{V} aneinander angrenzen, einander jedoch nicht überlappen. Ebenfalls dargestellt sind die unterhalb der Auflagefläche 5 befindlichen Abbildungs-Mikrolinsenarrasy und Ausleucht-Mikrolinsenarrays, deren Mikrolinsen jeweils als Quadrate angedeutet sind. Die Ausleucht-Mikrolinsenarrays 17-17^{VIII} sind gepunktet dargestellt, wohingegen die Abbildungs-Mikrolinsenarrays 9-9^{V} mittels durchgezogener Linien angedeutet sind. In der dargestellten Ausführungsform sind die Ausleucht-Mikrolinsenarrays 17'-17^{VIII} und Abbildungs-Mikrolinsenarrays 9-9^{V} jeweils zweier benachbarter optischer Sensoren 6-6^{V} einstückig auf einem Substrat ausgebildet. Bei anderen Ausführungsformen sind alle Ausleucht-Mikrolinsenarrays 17'-17^{VIII} und alle Abbildungs-Mikrolinsenarrays 9-9^{V} einstückig, vorzugsweise auf einem Substrat, ausgebildet. Dieses Substrat kann insbesondere im Bereich der Abbildungs-Mikrolinsenarrays 9-9^{V} in einzelne Kanäle strukturiert sein, die gegeneinander optisch isoliert sind.

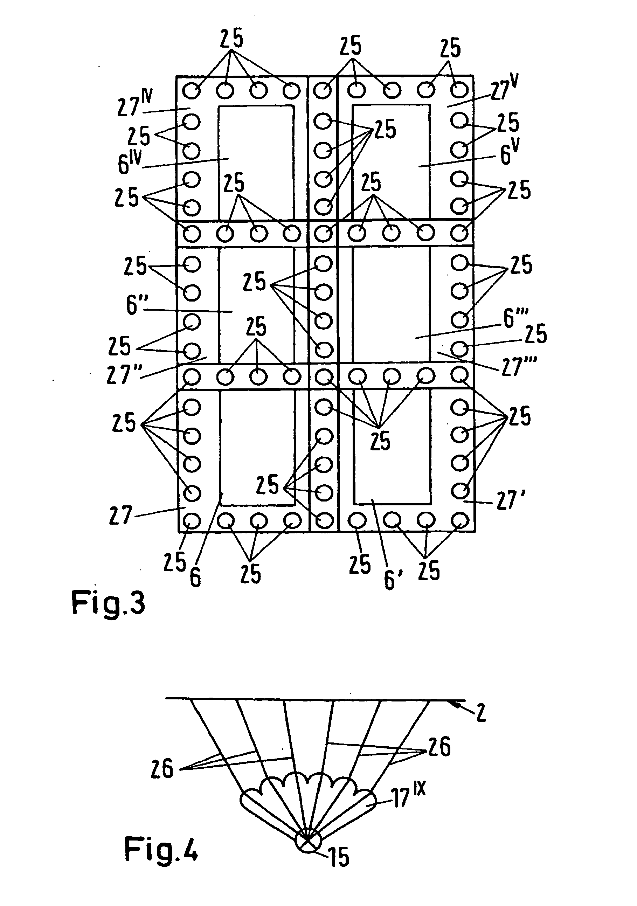

In Fig. 3 ist eine schematische Darstellung einer Anordnung von optischen Sensoren 6-6^{V} Leuchtmitteln 25 sowie zugehöriger Abbildungsbereiche 27-27^{V} dargestellt. Die einzelnen Abbildungsbereiche 27-27^{V} überlappen hierbei jeweils die angrenzenden Abbildungsbereiche 27-27^{V}. Hierdurch ist es möglich, auch noch nachträglich die einzelnen Abbildungsbereiche 27-27^{V} im Falle einer mechanischen Dejustage eines der optischen Sensoren 6-6^{V} oder mehrerer der optischen Sensoren 6-6^{V} oder eines der Elemente der Abbildungsoptik, beispielsweise eines oder mehrerer der Abbildungs-Mikrolinsenarrays (insbesondere, wenn diese nicht auf einem gemeinsamen als Träger dienenden Substrat ausgebildet sind), mittels eines Bildverarbeitungsalgorithmus gegeneinander auszurichten. Bei der in Fig. 3 dargestellten Ausführungsform sind benachbart und zwischen den optischen Sensoren jeweils Leuchtmittel 25 unterschiedlicher Art, d.h. Leuchtmittel 25 angeordnet, die elektromagnetische Strahlung unterschiedlicher Spektralbereiche emittieren. Diese können selektiv so angesteuert werden, dass das Dokument mit elektromagnetischer Strahlung unterschiedlicher spektraler Verteilung alternativ, d.h. zeitversetzt, oder zeitgleich ausgeleuchtet werden kann. Die Ausleuchtungsoptik ist entsprechend so ausgestaltet, dass die Ausleuchtung des Dokuments für die unterschiedlichen spektralen elektromagnetischen Strahlungen jeweils homogen ist. Die einzelnen Leuchtmittel können ferner so miteinander gruppiert sein, dass zusätzlich oder alternativ eine Ausleuchtung des Dokuments unter unterschiedlichen Belichtungswinkeln möglich ist.

Während bei der Ausführungsform, die in Fig. 1 schematisch dargestellt ist, davon ausgegangen wird, dass die Ausleucht-Mikrolinsenarrays 17, 17', 17" und Abbildungs-Mikrolinsenarrays 9, 9' im Wesentlichen flach, d.h. in einer Ebene, ausgebildet sind, ist bei anderen Ausführungsformen vorgesehen, dass zumindest die Ausleuchtungsoptik Mikrolinsenarrays umfasst, deren Mikrolinsen nicht in einer flachen Ebene angeordnet sind. Fig. 4 zeigt einen Schnitt durch eine mögliche Ausgestaltung eines solchen Ausleucht-Mikrolinsenarrays 17^{IX}, das elektromagnetische Strahlung (Licht 26) auf das Dokument 2 leitet.

Bei einer bevorzugten Ausführungsform sind die Mikrolinsen eines Ausleucht-Mikrolinsenarrays jeweils Zerstreuungslinsen. In anderen Ausführungsformen können die einzelnen Linsen Sammellinsen sein.

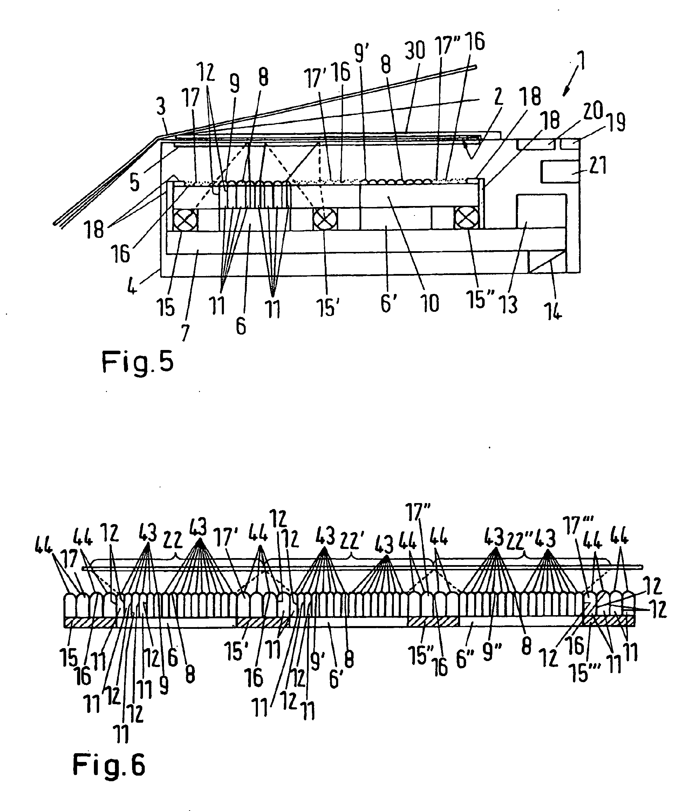

In Fig. 5 ist eine weitere Ausführungsform eines Dokumentenerfassungssystems 1' dargestellt. Gleiche technische Merkmale weisen dieselben Bezugzeichen wie in Fig. 1 auf. Die Ausführungsform nach Fig. 5 unterscheidet sich von der nach Fig. 4 dadurch, dass eine Dokumentabdeckung 30 an dem Gehäuse 4 angeordnet ist. Diese kann einstückig mit dem Gehäuse 4 ausgebildet sein. Sie dient einerseits als Führung für das Dokument 2. Andererseits sorgt die Dokumentabdeckung 30 dafür, dass das Dokument 2 optimal an der Dokumentauflagefläche 5 anliegt. Ferner wird ein Austreten von elektromagnetischer Strahlung, die zum Ausleuchten des Dokuments 2 verwendet wird, verhindert. Insbesondere bei Verwendung von elektromagnetischer Strahlung im UV-Spektralbereich ist eine solche Dokumentabdeckung 30 vorteilhaft, um eine gesundheitliche Gefährdung des Bedienpersonals auszuschließen. Diese gilt auch bei einer Verwendung von Laserdioden als Leuchtmittel zur Ausleuchtung. In solchen Fällen ist insbesondere die einstückige Ausführung der Dokumentabdeckung 30 mit dem Gehäuse 4 von Vorteil, da ein unbeabsichtigtes Öffnen der Dokumentabdeckung 30 unmöglich ist. Ferner wird ein Führen des Dokuments erleichtert. Andere Ausführungsformen können vorsehen, dass die Dokumentabdeckung an dem Gehäuse angelenkt ist. Bei solchen Ausführungsformen können ein oder mehrere Kontaktelemente vorgesehen sein, die eine ordnungsgemäße Anordnung der Dokumentabdeckung überwachen und gegebenenfalls eine Verwendung der Leuchtmittel verhindern, sofern durch eine nicht ordnungsgemäße Anordnung eine Gesundheitsgefährdung eintreten könnte und/oder eine ordnungsgemäße Abbildung zur Verifikation des Dokuments 2 nicht gewährleistet ist.

In Fig. 6 ist ein optisches System 41 einer weiteren sehr stark vereinfachten Ausführungsform eines Dokumenterfassungssystems dargestellt. Ein abzubildendes Objekt, beispielsweise ein Dokument 2, ist in einem Abstand über einer Mikrolinsenarrayanordnung 42 angeordnet, die Abbildungs-Mikrolinsenarrays 9, 9', 9" einer Abbildungsoptik 8 und Ausleucht-Mikrolinsenarrays 17, 17', 17", 17'" einer Ausleuchtungsoptik 16 umfasst. Bei dieser Ausführungsform sind Mikrolinsen 43 der Abbildungsoptik 8 und Mikrolinsen 44 der Ausleuchtungsoptik 16 integral aus demselben Material wie ein Substrat 10 gefertigt. Ferner sind die den Mikrolinsen 43 und 44 zugeordneten optischen Kanäle 11 in dem Substrat so ausgebildet, dass sie optisch gegeneinander isoliert sind. Dies bedeutet, dass sie durch für elektromagnetische Strahlung undurchlässige Wandschichten 12 voneinander getrennt sind. Aus Gründen der Übersichtlichkeit sind exemplarisch nur einige und nicht alle Wandschichten in Fig. 6 mit dem Bezugszeichen 12 gekennzeichnet. Die Abbildungs-Mikrolinsenarrays 9, 9', 9" und die Ausleucht-Mikrolinsenarrays 17, 17', 17", 17'" sind gemeinsam einstückig in der Mikrolinsenarrayanordnung 42 ausgebildet. Die einzelnen Abbildungs-Mikrolinsenarrays 9, 9', 9" sind hierbei so ausgebildet, dass ihre Erfassungsbereiche 22, 22', 22" aneinander angrenzen, wenn das Dokument 2 in einem vorgegebenen Abstand parallel zu der Mikrolinsenarrayanordnung 42 ausgerichtet ist. Die Abbildungs-Mikrolinsenarrays 9, 9', 9" sorgen somit für eine Abbildung des Dokuments 2 auf optische Sensoren 6, 6', 6" und die Austeucht-Mikrolinsenarrays 17, 17', 17", 17'" für ein Leiten von elektromagnetischer Strahlung, die von Leuchtmitteln 15, 15', 15", 15'" ausgesandt wird, auf das Dokument 2. Um die Ausleucht-Mikrolinsenarrays 17,17', 17", 17'" und Abbildungs-Mikrolinsenarrays 9, 9', 9" unterscheiden zu können, sind die Mikrolinsen 43 der Abbildungs-Mikrolinsenarrays 9, 9', 9" und deren Kanäle 11 schmaler als die Mikrolinsen 44 und der Ausleucht-Mikrolinsenarrays 17, 17', 17", 17"' und deren Kanäle 11 dargestellt. Es ergibt sich für den Fachmann, dass hierdurch weder eine geometrische Ausgestaltung noch ein zahlenmäßiges Verhältnis der Mikrolinsen 43 der Abbildungs-Mikrolinsenarrays 9, 9', 9" und der Mikrolinsen 43 der Ausleucht-Mikrolinsenarrays 17, 17', 17", 17'" angegeben werden sollen.

Es versteht sich für den Fachmann, dass die dargestellten Ausführungsformen lediglich exemplarisch zu versehen sind. Insbesondere die rasterartige Anordnung der optischen Sensoren als auch die Anordnung der Leuchtmittel kann den entsprechenden Bedürfnissen angepasst werden. Da jedoch sowohl die Dokumente als auch die optischen Sensoren zumeist eine rechteckige Form aufweisen, werden die Raster vorzugsweise ebenfalls ein rechteckiges oder quadratisches Muster darstellen.

### Bezugszeichenliste

- 1, 1': Dokumentenerfassungssystem
- 2: Dokument
- 3: Reisepass
- 4: Gehäuse
- 5: Dokumentenauflagefläche
- 6, 6', ... 6^{V}: optische Sensoren
- 7: Trägerstruktur
- 8: Abbildungsoptik
- 9, 9', ... 9^{V}: Abbildungs-Mikrolinsenarray
- 10: Substrat
- 11: Kanäle
- 12: Wandschichten
- 13: Auswerteeinheit
- 14: Schnittstelle
- 15, 15', 15": Leuchtmittel
- 16: Ausleuchtungsoptik
- 17, 17', 17" ... 17^{VIII}, ₁₇^{IX}: Ausleucht-Mikrolinsenarrays
- 18: Abblendelemente
- 19: Bedienelement
- 20: Anzeigeelement
- 21: Stromversorgung
- 22-22^{V}: Abbildungsbereiche
- 25: Leuchtmittel
- 26: Licht
- 27-27^{V}: Abbildungsbereiche
- 30: Dokumentabdeckung
- 41: optisches System
- 42: Mikrolinsenarrayanordnung
- 43: Mikrolinse eines Abbildungs-Mikrolinsenarrays
- 44: Mikrolinse eines Ausleucht-Mikrolinsenarrays

## Patentansprüche

1. Dokumenterfassungssystem (1, 1') zum optischen Erfassen eines Dokuments (2) umfassend
mindestens ein Leuchtmittel (15) zum Beleuchten des Dokuments (2), wobei das mindestens eine Leuchtmittel (15) mit einer Ausleuchtungsoptik (16) gekoppelt ist, die eine homogene Ausleuchtung des Dokuments (2) ermöglicht,
mindestens einen optischen Sensor (6'-6^{V}) und
eine Abbildungsoptik zum Abbilden des Dokuments (2) auf den mindestens einen optischen Sensor (6'-6^{V}),
**dadurch gekennzeichnet, dass**
weitere optische Sensoren (6'-6^{V}) gemeinsam mit dem mindestens einen optischen Sensor (6) in einem Raster angeordnet sind und dem mindestens einen optischen Sensor (6) ein Abbildungs-Mikrolinsenarray (9) und den weiteren optischen Sensoren (6'-6^{V}) jeweils ein weiteres Abbildungs-Mikrolinsenarray (9'-9^{V}) zugeordnet sind und zusätzlich zu dem mindestens einen Leuchtmittel (15) weitere Leuchtmittel (15', 15") zum Ausleuchten des Dokuments (2) vorgesehen sind und mindestens eines dieser Leuchtmittel (15, 15', 15") zwischen dem mindestens einen optischen Sensor (6'-6^{V}) und einem der weiteren optischen Sensoren (6'-6^{V}) angeordnet ist und die übrigen Leuchtmittel (15, 15', 15") des mindestens einen Leuchtmittels (15) und weiteren Leuchtmittel (15', 15") benachbart zu dem mindestens einen optischen Sensor (6) oder benachbart zu einem der weiteren optischen Sensoren (6'-6^{V}) oder zwischen dem mindestens einen optischen Sensor (6) und einem der weiteren optischen Sensoren (6'-6^{V}) oder zwischen zwei der weiteren optischen Sensoren ((6'-6^{V}) angeordnet sind und die Ausleuchtungsoptik (16) für das mindestens eine Leuchtmittel (15) mindestens ein Ausleucht-Mikrolinsenarray (17) und für die weiteren Leuchtmittel (15', 15") jeweils ein weiteres Ausleucht-Mikrolinsenarray (17', 17" ... 17^{VIII}) umfasst und das eine Abbildungs-Mikrolinsenarray (9) und die weiteren Abbildungs-Mikrolinsenarrays (9'-9^{V}) und das mindestens eine Ausleucht-Mikrolinsenarray (17) und die jeweils weiteren Ausleucht-Mikrolinsenarrays (17', 17" ... 17^{VIII}) miteinander mechanisch verbunden sind.

2. Dokumenterfassungssystem (1, 1') nach Anspruch 1, **dadurch gekennzeichnet, dass** das eine Abbildungs-Mikrolinsenarray (9) und/oder die weiteren Abbildungs-Mikrolinsenarrays (9'-9^{V}) und das mindestens eine Ausleucht-Mikrolinsenarray (17) und/oder die weiteren Ausleucht-Mikrolinsenarrays (17', 17" ... 17^{VIII}) gemeinsam auf einem Trägermaterial (10) ausgebildet sind.

3. Dokumenterfassungssystem (1,1') nach einem der Ansprüche 1 oder 2, **dadurch gekennzeichnet, dass** ein oder mehrere zusätzliche Leuchtmittel mit der Ausleuchtungsoptik (16) gekoppelt sind, so dass das Dokument (2) mit der von dem einen oder den mehreren zusätzlichen Leuchtmitteln emittierten Strahlung zusätzlich oder alternativ ausleuchtbar ist, wobei das eine oder die mehreren zusätzlichen Leuchtmittel die elektromagnetische Strahlung mit einem Spektrum emittieren, das sich von dem Spektrum der elektromagnetischen Strahlung des mindestens einen Leuchtmittels (15) und/oder der weiteren Leuchtmittel (15', 15") unterscheidet.

4. Dokumenterfassungssystem (1, 1') nach einem der Ansprüche 1 bis 3, **dadurch gekennzeichnet, dass** das mindestens eine Leuchtmittel (15), die weiteren Leuchtmittel (15', 15") und/oder das zusätzliche oder die zusätzlichen Leuchtmittel als LED oder Laserdioden ausgebildet sind.

5. Dokumenterfassungssystem (1, 1') nach einem der Ansprüche 3 oder 4, **dadurch gekennzeichnet, dass** die Ausleuchtungsoptik (16) ausgestaltet ist, das Dokument (2) mit der elektromagnetischen Strahlung des mindestens einen Leuchtmittels (15) und der weiteren Leuchtmittel (15', 15") unter einem ersten Beleuchtungswinkel einerseits und der elektromagnetischen Strahlung der zusätzlichen Leuchtmittel unter einem zweiten von dem ersten Beleuchtungswinkel verschiedenen zweiten Beleuchtungswinkel andererseits gleichzeitig oder zeitversetzt ausleuchtbar ist.

6. Dokumenterfassungssystem (1, 1') nach einem der Ansprüche 1 bis 5, **dadurch gekennzeichnet, dass** zu jedem mittels einer Mikrolinse der Abbildungsoptik (8) abgebildeten Dokumentbereich mindestens eine Mikrolinse der Ausleuchtungsoptik (16) korrespondiert.

7. Verfahren zum optischen Erfassen eines Dokuments (2) mittels Dokumenterfassungssystems (1, 1') umfassend die Schritte Ausleuchten des Dokuments (2) mittels mindestens einem Leuchtmittel (15-15"), wobei das Ausleuchten mittels einer mit dem mindestens einen Leuchtmittel (15) gekoppelten Ausleuchtungsoptik (16) ausgeführt wird, so dass das Dokument (2) homogen ausgeleuchtet wird,
Abbilden des Dokuments (2) auf mittels einer Abbildungsoptik (8) auf mindestens einen optischen Sensor (6-6^{V}), und
Erfassen einer Abbildung des Dokuments (2) mittels des mindestens einen optischen Sensors (6-6^{V}),
**dadurch gekennzeichnet, dass**
das Erfassen der Abbildung des Dokuments (2) mittels des optischen Sensors (6), dem ein Abbildungs-Mikrolinsenarray (9) zugeordnet ist, und gemeinsam mit dem mindestens einen optischen Sensor (6) in einem Raster angeordneten weiteren optischen Sensoren (6'-6^{V}), denen jeweils ein weiteres Abbildungs-Mikrolinsenarray (9'-9^{V}) zugeordnet ist, vorgenommen wird, wobei das Dokument (2) mittels des mindestens einen Leuchtmittels (15) und weiteren Leuchtmitteln (15', 15") ausgeleuchtet wird, wobei mindestens eines dieser Leuchtmittel (15, 15', 15") zwischen dem mindestens einen optischen Sensor (6) und einem der weiteren optischen Sensoren (6'-6^{V}) angeordnet ist und die übrigen Leuchtmittel (15, 15', 15") des mindestens einen Leuchtmittels (15) und weiteren Leuchtmittel (15', 15") benachbart zu dem mindestens einen optischen Sensor (6) oder benachbart zu einem der weiteren optischen Sensoren (6'-6^{V}) oder zwischen dem mindestens einen optischen Sensor (6) und einem der weiteren optischen Sensoren (6'-6^{V}) oder zwischen zwei der weiteren optischen Sensoren (6'-6^{V}) angeordnet sind und das Ausleuchten des Dokuments (2) mit der Ausleuchtungsoptik (16) ausgeführt wird, die für das mindestens eine Leuchtmittel (15) mindestens ein Ausleucht-Mikrolinsenarray (17) und für die weiteren Leuchtmittel (15', 15") jeweils ein weiteres Ausleucht-Mikrolinsenarray (17', 17" ... 17^{VIII}) umfasst, wobei das Abbildungs-Mikrolinsenarray (9) und die weiteren Abbildungs-Mikrolinsenarrays (9'-9^{V}) und das mindestens eine Ausleucht-Mikrolinsenarray (17) und die jeweils weiteren Ausleucht-Mikrolinsenarrays (17', 17" ... 17^{VIII}) miteinander mechanisch verbunden sind.

8. Verfahren nach Anspruch 7, **dadurch gekennzeichnet, dass** ein oder mehrere zusätzliche Leuchtmittel mit der Ausleuchtungsoptik (16) gekoppelt sind und das Dokument (2) mit der von dem einen oder den mehreren zusätzlichen Leuchtmitteln emittierten Strahlung zusätzlich oder alternativ ausgeleuchtet wird, wobei das eine oder die mehreren zusätzlichen Leuchtmittel die elektromagnetische Strahlung mit einem Spektrum emittieren, das sich von dem Spektrum der elektromagnetischen Strahlung des mindestens einen Leuchtmittels (15) und/oder der weiteren Leuchtmittel (15', 15") unterscheidet.

9. Verfahren nach Anspruch 8, **dadurch gekennzeichnet, dass** das Dokument (2) mit der elektromagnetischen Strahlung des mindestens einen Leuchtmittels (15) und der weiteren Leuchtmittel (15', 15") unter einem ersten Beleuchtungswinkel einerseits und der elektromagnetischen Strahlung der zusätzlichen Leuchtmittel unter einem zweiten von dem ersten Beleuchtungswinkel verschiedenen zweiten Beleuchtungswinkel andererseits gleichzeitig oder zeitversetzt ausgeleuchtet wird.

10. Verfahren nach einem der Ansprüche 7 bis 9, **dadurch gekennzeichnet, dass** jeder mittels einer Mikrolinse der Abbildungsoptik (8) abgebildete Dokumentbereich des Dokuments (2) mittels mindestens einer Mikrolinse der Ausleuchtungsoptik (16) ausgeleuchtet wird.

## Claims

1. A document acquisition system (1, 1') for optically acquiring a document (2 comprising: at least one luminous device (15) for illuminating the document (2);
wherein said at least one luminous device (15) is coupled to a lighting optics (16) which permits homogeneous lighting of the document (2);
at least one optical sensor (6^{I}-6^{v}) and imaging optics (8) for imaging the document (2) onto said at least one optical sensor (6);
**characterized in that**
further optical sensors (6) are disposed together with said at least one optical sensor (6^{I}-6^{v}) in a grid and **in that** an imaging microlens array (9) is associated with said at least one optical sensor (6) and **in that** further luminous devices (15', 15") are provided in addition to said at least one luminous device (15) for lighting of the document (2) and at least one of said luminous devices (15, 15', 15") is arranged between said at least one optical sensor (6^{I}-6^{v}) and one of said further optical sensors (6^{I}-6^{v}) and the remaining luminous devices (15, 15', 15") of said at least one luminous device (15,) and said further luminous devices (15', 15") are arranged next to said at least one optical sensor (6) or next to one of said further optical sensors (6^{I}-6^{v}) or between said at least one optical sensor (6) and one of said further optical sensors (6^{I}-6^{v}) or between two of said further optical sensors (6^{I}-6^{v}) and **in that** said lighting optics (16) comprises at least one lighting microlens array (17) for said at least one luminous device (15) and further lighting microlens arrays (17) each for a respective one of said further luminous devices (15', 15") and **in that** and said imaging microlens array (9) and said further imaging microlens arrays (9^{I}-9^{v}) and said at least one lighting microlens array (17) and said further lighting microlens arrays (17^{II}-17^{VIII}) are mechanically connected to one another.

2. The document acquisition system (1, 1') according to claim 1, **characterized in that** said imaging microlens array (9) and/or said further imaging microlens arrays (9^{I}-9^{v}) and said at least one lighting microlens array (17) and/or said further lighting microlens arrays (17^{I}, 17^{II} - 17^{VIII}) are formed together on a carrier material (10).

3. The document acquisition system (1, 1') according to claim 1 or 2, **characterized in that** one or more additional luminous devices are coupled to said optical lighting optics (16) so that the document (2) can additionally or alternatively be lighted using radiation emitted by said at least one additional luminous device (15) or said additional luminous devices (15) emitting the electromagnetic radiation with a spectrum differing from a spectrum of electromagnetic radiation of said at least one luminous device (15) and/or of said further luminous devices (15', 15").

4. The document acquisition system (1, 1') according to one of claims 1 to 3, wherein said at least one luminous device (15), said further luminous devices (15', 15") and/or said additional luminous devices (15) are in the form of LEDs or laser diodes.

5. The document acquisition system (1, 1') according to claim 3 or 4, wherein said lighting optics (16) is configured in such a way that the document (2) can be lit simultaneously or in a temporally offset manner using on one hand the electromagnetic radiation of said at least one luminous device (15) and of said further luminous devices (15', 15") at a first illumination angle and on the other hand the electromagnetic radiation of said at least one additional luminous device (15) at a second illumination angle different than the first illumination angle.

6. The document acquisition system (1, 1') according to one of claims 1 to 5, wherein at least one microlens of said lighting optics (16) corresponds to each document region imaged by a microlens of said optical imaging optics (8).

7. A method for optically acquiring a document (2) using a document acquisition system (1, 1'), the method comprising the following steps: lighting the document (2) with at least one luminous device (15 - 15"), wherein the lighting is carried out using a lighting optics (16) coupled to said at least one luminous device (15) for lighting the document (2) homogeneously;
imaging the document (2) onto at least one optical sensor (6^{I}-6^{v}) with an optical imaging optics (8); and
acquiring an image of the document (2) with the at least one optical sensor (6); **characterized in that**
the acquisition of the documents (2) image is carried out jointly via said optical sensor(6), with which an imaging microlens array (9) is associated, and further optical sensors (6^{I}-6^{v}) disposed together with the at least one optical sensor (6) in a grid, wherein a further imaging microlens arrays (9^{I}-9^{v}) is associated with each further optical sensors (6^{I}-6^{v}); wherein the document(2) is lit by said at least one luminous device (15) and further luminous devices (15', 15"), wherein at least one of said luminous devices (15, 15', 15") is arranged between said at least one optical sensor (6^{I}-6^{v}) and one of said further optical sensors (6^{I}-6^{v}) and the remaining luminous devices (15, 15', 15") of said at least one luminous device (15) and said further luminous devices (15', 15") are arranged next to said at least one optical sensor (6) or next to one of said further optical sensors (6^{I}-6^{v}) or between said at least one optical sensor (6) and one of said further optical sensors (6^{I}-6^{v}) or between two of said further optical sensors (6^{I}-6^{v}) and **in that** the lighting of the document (2) is carried out via said lighting optics (16), comprising at least one lighting microlens array (17) for said at least one luminous device (15) and further lighting microlens arrays (17) each for a respective one of said further luminous devices (15', 15") and **in that** said imaging microlens array (9) and said further imaging microlens arrays (9^{I}-9^{v}) and said at least one lighting microlens array (17) and said further lighting microlens arrays (17^{II}-17^{VIII}) are mechanically connected to one another.

8. The method according to claim 7, **characterized in that** one or more additional luminous devices are coupled to said optical lighting optics (16) and **in that** the document (2) is additionally or alternatively lighted using radiation emitted by said at least one additional luminous device (15) or said additional luminous devices (15) emitting the electromagnetic radiation with a spectrum differing from a spectrum of electromagnetic radiation of said at least one luminous device (15) and/or of said further luminous devices (15', 15").

9. The method according to claim 8, **characterized in that** the document (2) is simultaneously or in a temporally offset manner lighted using on the one hand electromagnetic radiation of the at least one luminous device (15) and of the further luminous devices (15) at a first illumination angle and on the other hand the electromagnetic radiation of the at least one additional luminous device (15) at a second illumination angle different than the first illumination angle.

10. The method according to claims 7 to 9, **characterized in that** each document region of the document (2), imaged by a microlens of the optical imaging optics (8), is lit with at least one microlens of the optical lighting optics (16).

## Revendications

1. Système de vérification de documents (1, 1') servant à la vérification optique d'un document (2) et comprenant :
au moins un moyen d'éclairage (15) servant à l'éclairage du document (2), ledit au moins un moyen d'éclairage (15) étant couplé à une optique d'éclairage (16) qui permet un éclairage homogène du document (2),
au moins un capteur optique (6'-6^{V}) et
une optique de reproduction servant à la reproduction du document (2) sur ledit au moins un capteur optique (6'-6^{V}),
**caractérisé en ce que** :
d'autres capteurs (6'-6^{V}) sont disposés conjointement avec ledit au moins capteur optique (6) dans un quadrillage ; et un réseau de microlentilles de reproduction (9) est affecté au dit au moins capteur optique (6) ; et un autre réseau de microlentilles de reproduction (9'-9^{V}) est affecté à chaque autre capteur optique (6'-6^{V}) ; et d'autres moyens d'éclairage (15', 15") sont prévus en plus dudit au moins un moyen d'éclairage (15) pour l'éclairage du document (2) ; et au moins un de ces moyens d'éclairage (15, 15', 15") est disposé entre ledit au moins un capteur optique (6'-6^{V}) ; et un des autres capteurs optiques (6'-6^{V}) et les moyens d'éclairage restants (15, 15', 15") dudit au moins un moyen d'éclairage (15) et des autres moyens d'éclairage (15', 15") sont disposés dans le voisinage dudit au moins un capteur optique (6) ou dans le voisinage d'un des autres capteurs optiques (6'-6^{V}) ou entre ledit au moins un capteur optique (6) et un des autres capteurs optiques (6'-6^{V}) ou entre deux des autres capteurs optiques (6'-6^{V}) ; et l'optique d'éclairage (16) comporte pour ledit au moins un moyen d'éclairage (15), au moins un réseau de microlentilles d'éclairage (17) et comporte pour chacun des autres moyens d'éclairage (15', 15") un autre réseau de microlentilles d'éclairage (17', 17" ... 17^{VIII}); et le réseau de microlentilles de reproduction (9) et les autres réseaux de microlentilles de reproduction (9'-9^{V}) et ledit au moins un réseau de microlentilles d'éclairage (17) et les autres réseaux de microlentilles d'éclairage (17', 17" ... 17^{VIII}) sont reliés mécaniquement entre eux.

2. Système de vérification de documents (1,1') selon la revendication 1, **caractérisé en ce que** le réseau de microlentilles de reproduction (9) et/ou les autres réseaux de microlentilles de reproduction (9'-9^{V}) et ledit au moins un réseau de microlentilles d'éclairage (17) et/ou les autres réseaux de microlentilles d'éclairage (17', 17" ... 17^{VIII}) sont formés ensemble sur un matériau porteur (10).

3. Système de vérification de documents (1, 1') selon l'une quelconque des revendications 1 ou 2, **caractérisé en ce qu'**un ou plusieurs moyens d'éclairage supplémentaires sont couplés à l'optique d'éclairage (16) de sorte que le document (2) puisse être éclairé en plus ou en variante avec le rayonnement émis par le ou les plusieurs moyens d'éclairage supplémentaires, le ou les moyens d'éclairage supplémentaires émettant le rayonnement électromagnétique avec un spectre qui se différencie du spectre du rayonnement électromagnétique dudit au moins un moyen d'éclairage (15) et/ou des autres moyens d'éclairage (15', 15").

4. Système de vérification de documents (1, 1') selon l'une quelconque des revendications 1 à 3, **caractérisé en ce que** ledit au moins un moyen d'éclairage (15), les autres moyens d'éclairage (15', 15") et/ou le ou les moyens d'éclairage supplémentaires sont conçus sous forme de DEL ou de diodes laser.

5. Système de vérification de documents (1, 1') selon l'une quelconque des revendications 3 ou 4, **caractérisé en ce que** l'optique d'éclairage (16) est agencée de sorte que le document (2) puisse être éclairé d'une manière simultanée ou décalée dans le temps d'une part avec le rayonnement électromagnétique dudit au moins un moyen d'éclairage (15) et des autres moyens d'éclairage (15', 15") sous un premier angle d'éclairage et, d'autre part avec le rayonnement électromagnétique des moyens d'éclairage supplémentaires sous un deuxième angle d'éclairage différent du premier angle d'éclairage.

6. Système de vérification de documents (1, 1') selon l'une quelconque des revendications 1 à 5, **caractérisé en ce qu'**au moins une microlentille de l'optique d'éclairage (16) correspond à chaque zone du document reproduite au moyen d'une microlentille de l'optique de reproduction (8).

7. Procédé de vérification optique d'un document (2) au moyen d'un système de vérification de documents (1,1'), comprenant les étapes suivantes :
éclairage du document (2) au moyen d'au moins un moyen d'éclairage (15-15"),
l'éclairage étant réalisé au moyen d'une optique d'éclairage (16) couplée au dit au moins un moyen d'éclairage (15) de sorte que le document (2) soit éclairé de manière homogène,
reproduction du document (2) au moyen d'une optique de reproduction (8) sur au moins un capteur optique (6-6^{V}), et
vérification d'une reproduction du document (2) au moyen dudit au moins un capteur optique (6-6^{V}),
**caractérisé en ce que** :
la vérification de la reproduction du document (2) est réalisée au moyen du capteur optique (6), auquel est affecté un réseau de microlentilles de reproduction (9), et au moyen d'autres capteurs optiques (6'-6^{V}), disposés conjointement avec ledit au moins un capteur optique (6) dans un quadrillage et à chacun desquels est affecté un autre réseau de microlentilles de reproduction (9'-9^{V}), le document (2) étant éclairé au moyen dudit au moins un moyen d'éclairage (15) et d'autres moyens d'éclairage (15', 15"), au moins un de ces moyens d'éclairage (15, 15', 15") étant disposé entre ledit au moins un capteur optique (6) et un des autres capteurs optiques (6'-6^{V}), et les moyens d'éclairage restants (15, 15', 15") dudit au moins un moyen d'éclairage (15) et des autres moyens d'éclairage (15', 15") étant disposés dans le voisinage dudit au moins un capteur optique (6) ou dans le voisinage d'un des autres capteurs optiques (6'-6^{V}) ou entre ledit au moins un capteur optique (6) et un des autres capteurs optiques (6'-6^{V}) ou entre deux des autres capteurs optiques (6'-6^{V}) et l'éclairage du document (2) étant réalisé avec l'optique d'éclairage (16) qui comporte, pour ledit au moins un moyen d'éclairage (15), au moins un réseau de microlentilles d'éclairage (17) et comporte pour chacun des autres moyens d'éclairage (15', 15") un autre réseau de microlentilles d'éclairage (17', 17" ... 17^{VIII}), le réseau de microlentilles de reproduction (9) et les autres réseaux de microlentilles de reproduction (9'-9^{V}) et ledit au moins un réseau de microlentilles d'éclairage (17) et les autres réseaux de microlentilles d'éclairage (17', 17" ... 17^{VIII}) étant reliés mécaniquement entre eux.

8. Procédé selon la revendication 7, **caractérisé en ce qu'**un ou plusieurs moyens d'éclairage supplémentaires sont couplés à l'optique d'éclairage (16) et le document (2) est éclairé en plus ou en variante avec le rayonnement émis par le ou les plusieurs moyens d'éclairage supplémentaires, le ou les plusieurs moyens d'éclairage supplémentaires émettant le rayonnement électromagnétique avec un spectre qui se différencie du spectre du rayonnement électromagnétique dudit au moins un moyen d'éclairage (15) et/ou des autres moyens d'éclairage (15', 15").

9. Procédé selon la revendication 8, **caractérisé en ce que** le document (2) est éclairé d'une manière simultanée ou décalée dans le temps d'une part avec le rayonnement électromagnétique dudit au moins un moyen d'éclairage (15) et des autres moyens d'éclairage (15', 15") sous un premier angle d'éclairage et, d'autre part, avec le rayonnement électromagnétique des moyens d'éclairage supplémentaires sous un deuxième angle d'éclairage différent du premier angle d'éclairage.

10. Procédé selon l'une quelconque des revendications 7 à 9, **caractérisé en ce que** chaque zone du document (2) reproduite au moyen d'une microlentille de l'optique de reproduction (8) est éclairée au moyen d'au moins une microlentille de l'optique d'éclairage (16).
